# EUROPEAN PATENT APPLICATION

(11) **EP 1 867 386 A1**
(43) Date of publication of application: **19.12.2007**
(21) Application number: 06011485.7
(22) Date of filing: 02.06.2006
(51) Int. Cl.: B01J 19/08

(54) **Method for the production of nanoparticles**

(71) Applicant: Wendling, Thomas, 81669 München (DE)
(72) Inventor: Wendling, Thomas, 81669 München (DE)
(74) Representative: Huebner, Stefan Rolf

(57) **Abstract**

The present invention relates to methods for the production of nanoparticles which may be optionally coated. In particular, the present invention relates to methods for the production of nanoparticles characterized in that precursors are subjected to substantially the same amount of activation energy in the activation zone at a predetermined concentration of precursors and at a predetermined time of exposure to the activation energy. Furthermore, the present invention relates to nanoparticles produced by the methods according to the present invention. Finally, the present invention concerns a device for producing nanoparticles according to the method of the present invention. The activation energy is selected from the group of RF plasma, MW plasma, IR plasma, thermal plasma, heat, photon absorption, plasma by electric discharge or radioactive radiation or sonar energy.

## Description

### Field of the invention

The present invention relates to methods for the production of nanoparticles which may be optionally coated. In particular, the present invention relates to methods for the production of nanoparticles characterized in that precursors are subjected to substantially the same amount of activation energy in the activation zone at a predetermined concentration of precursors and at a predetermined time of exposure to the activation energy. Furthermore, the present invention relates to nanoparticles produced by the methods according to the present invention. Finally, the present invention concerns a device to produce nanoparticles according to the method of the present invention.

### Background of the invention

Nanoparticles normally comprise particles of chemical elements, such as carbon, silicon, gold, iron etc. or particles of simple compounds such as silicon-germanium compounds, aluminium oxides, silicon-nitrides, etc. as well as particles that form agglomerates of two or more compounds, like Si/C/N, Si₃N₄/SiC.

A nanoparticle is a microscopic particle whose size is measured in nanometers (nm). It is defined as a particle with at least one dimension <100nm. Nanoparticles made of semiconducting material may also be labeled quantum dots if they are small enough (typically sub 10nm) that quantization of electronic energy levels occurs. Nanoparticles are of great scientific and engeneering interest as they are effectively a bridge between bulk materials and atomic or molecular structures. A bulk material should have constant physical properties regardless of its size, but at the nano-scale this is often not the case. Size-dependent properties are observed such as quantum confinement in semiconductor particles, surface plasmon resonance in some metal particles and superparamagnetism in magnetic materials. (Semi)-solid and soft nanoparticles have been manufactured. A prototype nanoparticle of semi-solid nature is the liposome. The properties of materials change as their size approaches the nanoscale. For example, the bending of bulk copper (wire, ribbon, etc.) occurs with movement of copper atoms/clusters at about the 50 nm scale. Copper nanoparticles smaller than 50 nm are considered super hard materials that do not exhibit the same malleability and ductility as bulk copper. The interesting and sometimes unexpected properties of nanoparticles are partly due to the aspects of the surface of the material dominating the properties in lieu of the bulk properties due to the large surface/bulk ratios. The percentage of atoms at the surface of a material becomes significant as the size of that material approaches the nanoscale. For bulk materials larger than one micrometer the percentage of atoms at the surface is minuscule relative to the total number of atoms of the material. Suspensions of nanoparticles are possible because the interaction of the particle surface with the solvent is strong enough to overcome differences in density, which usually result in a material either sinking or floating in a liquid. Nanoparticles often have unexpected visible properties because they are small enough to scatter/shift visible light rather than absorb it or they show fluorescent behaviour the bulk material does not show. For example gold nanoparticles appear deep red to black in solution. Metal, dielectric, and semiconductor nanoparticles have been formed, as well as hybrid structures (e.g., core-shell nanoparticles). Nanospheres, nanorods, and nanocups are just a few of the shapes that have been grown. Semiconductor quantum dots and nanocrystals are types of nanoparticles. Such nanoscale particles are used in biomedical applications as drug carriers or imaging agents. Various types of liposome nanoparticles are currently used clinically as delivery systems for anticancer drugs and vaccines. Nanoparticle characterization is necessary to establish understanding and control of nanoparticle synthesis and applications. Characterization is done by using a variety of different techniques, mainly drawn from materials science. Common techniques are electron microscopy [TEM,SEM], scanning tunneling microscopy (STM), atomic force microscopy [AFM], x-ray photoelectron spectroscopy [XPS], powder x-ray diffractometry [XRD], and Fourier transform infrared spectroscopy [FTIR]. Besides research purposes, nanoparticles have already been used for commercial purposes. Refrigerators and washing machines that are able to release silver nanoparticles enable the machines to kill micro-organisms, as the silver nanoparticles inhibit the respiration of the micro-organisms and suffocate them. This ensures that food will stay fresh for a very long time and clothes are cleaned thoroughly. Nanoparticle research is currently an area of intense scientific research, due to a wide variety of potential applications in biomedical, optical, and electronic fields. The National Nanotechnology Initiative of the United States government has driven huge amounts of state funding exclusively for nanoparticle research.

Thus, today and in the future nanoparticles find and will find brought application in a variety of fields. For example, application of nanoparticles is known in the field of cosmetics, coatings, electronics, polishing and catalysis. In addition, nanoparticles are used in the field of semiconductors, e.g. silicon nanoparticles which are of special interest to the industry in view of their potential uses in photoluminescence based devices, doped electroluminescence light emitters, memory devices and other microelectronic devices, such as diodes and resistors. Another field for the application of nanoparticles is its use in coating systems, like varnishes or paints, especially as pigments in said systems, in particular of hardened an self-cleaning systems. Finally, application of nanoparticles is described in the field of pharmaceutical products, fertilizers, pesticides and the like.

Nanoparticles can be produced by different methods. Conventional methods used to prepare nanoparticles include pyrolysis, reaction in the gas phase, crystallization, precipitation and the like under conditions of nucleation of the precursors in the zone of reaction, in the following sometimes also referred to as nanoparticles generation zone or activation zone. For example, the synthesis using the physical vapour synthesis method comprises the step of sputtering, thermalisation and clustering. In the sputtering step, a solid precursor is fragmented to molecular size particles, which comprise a high temperature of a vapour of the aforementioned precursor material. In the thermalisation step, a reactant is added to the vapour, which is then cooled at a controlled rate and condenses at the clustering step to form nanoparticles.

Another known method to produce nanoparticles is a technique using arc energy. This technique allows using a wide variety of precursor formats and chemical composition, thus, expanding the number of materials that can be manufactured as nanopowders at industrial scale.

Another example for a method for the generation of nanoparticles is a Laser Ablation of Microparticles (LAM) process, which is used for making nanoparticles of a wide variety of materials. In the LAM process, a high-energy laser pulse hits a microparticle, larger than 1µm in size, initiating a breakdown and shockwawe formation. As the shock passes through the microparticle, it converts a high percentage of the mass to nanoparticles. The laser ablation method results in nanoparticles with a better controllable diameter and a small dispersion compared to particles generated by the methods described above. The LAM method claims a particle size deviation of 20% or less in comparison to other methods. However, the LAM method is economically unfavourable due to the low efficiency.

Another method for the production of nanoparticles is simply milling larger particles. However, milling the larger entities to obtain nanoparticles necessitate subsequent classification of the generated nanoparticles. Finally, pyrolysis is applied to generate nanoparticles. More precisely, the precursor is pyrolyzed in a reactor to grow nanoparticles. This method is also relative simple. However, the sizes of the nanoparticles are dependent on a concentration of the precursor, and the concentration of the precursor must be low in order to prepare small sized nanoparticles. Thus, when using pyrolysis, a small number of nanoparticles are produced due to a low concentration of the precursor.

Obviously, high production rate, unagglomerated particles and narrow particle size distribution are at odds in the classical processes of gas phase synthesis. A high production rate is obtained only with high particle density in the gas stream and a high particle density provokes particle agglomeration. Further, to avoid sintering of the agglomerates, it is necessary to work at the lowest possible temperature where kinetic obstacles prevent the chemical reaction. To obtain the necessary high temperature in the fast flowing reaction gas, a relatively long residence time at elevated temperature is necessary and this leads to a brought particles size distribution. Another way to avoid sintering of the particles is to coat the nanoparticles.

In the art, the use of a resonant microwave plasma process has been suggested to solve the above problems known from gas condensation processes. Association and ionization of the reactants should allegedly remove the kinetic obstacles and reduces the reaction temperature significantly. E.g. in DE 196 38 601 and DE 102 03 907 processes are described using the microwave plasma technique for synthesizing various nanostructured particles. However, the nanoparticles produced by applying microwave plasma still suffers from a wide distribution of nanoparticles sizes and, therefore, require to apply expensive methods to select particles of the desired size. Further, the technique is limited to certain reactions and can be applied in the gas phase reaction only.

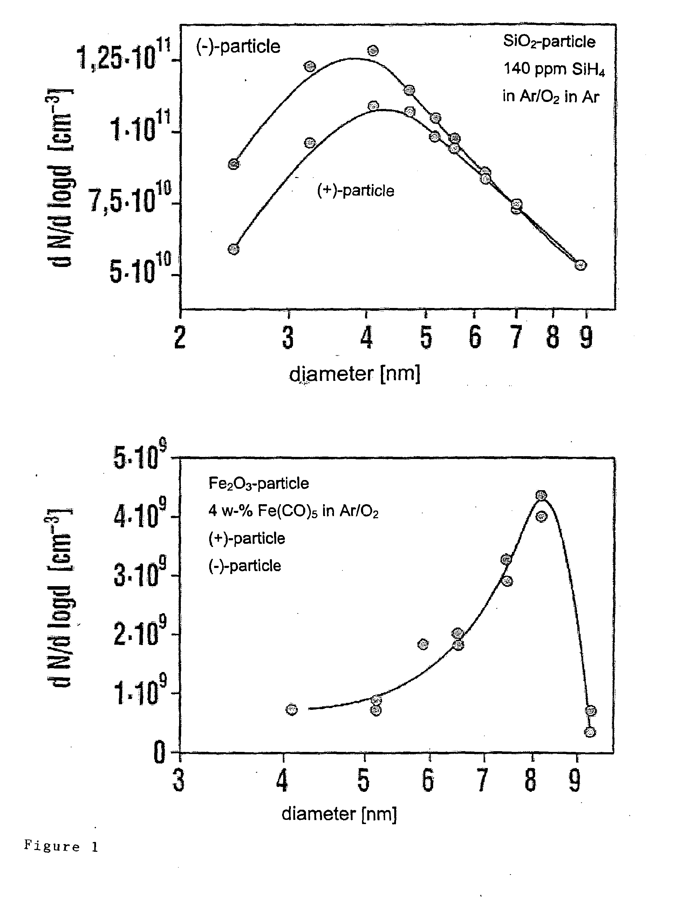

The Vollath system as described in the above mentioned documents is based on a resonating microwave system, which can be highly non-uniform, see e.g. figure 1, especially when the system has the same dimensions as the reactor, which is the case in the mentioned patent. This is contrary to the gist of the present invention, as the particles would not experience a uniform activation energy exposure over a predetermined time, namely the time in the activation zone. The intensity and the electromagnetic field strength in the center of the Vollath resonator will be stronger than in the periphery of the activation zone.

Hence, an object of the present invention is to provide a method allowing the synthesis of nanoparticles with a narrow particle size distribution which would preferably make any classification of the obtained nanoparticles redundant.

A further objection of the present invention is the provision of nanoparticles having a very narrow particle size distribution as well as a device to produce the same.

### Summary of the invention

The present invention provides a method for producing nanoparticles which have a very narrow size distribution and are preferably uniform in size, said method comprises the step of forming nanoparticles in an activation zone of a reactor from precursors by applying activation energy thereto. Said precursors being activated in an activation zone of said reactor for a predetermined time at a predetermined concentration of the precursors, wherein the method of the present invention is characterized in that the amount of activation energy over the time when passing the activation zone is substantially the same for the precursors.

The activation energy may be introduced into the activation zone for example with electromagnetic waves.

The present inventor found that in order to obtain nanoparticles being uniform in size distribution the activation energy, i.e. the energy density in the activation zone must be uniform and constant over the time the particles is exposed to it in order to produce said monodispersed nanoparticles. In particular, the energy density vertical to the introduced electronic waves is substantially uniform, to ensure that precursors in the center of and at the periphery of the activation zone are subjected to the same amount of activation energy.

In one embodiment of this invention, where a resonant system for the activation is used, the ratio of the wavelength of the media which resonates vs. the dimension of the activation zone should be at least 5:1 or less than 0,2:1, preferably 0,1:1, respectively. This guaranty, that the activation energy does not fluctuate significantly over the activation zone, where the nanoparticles are generated. Here an example is a resonant plasma generated by a electromagnetic wavelength of 22 m and a reactor dimension of 20 cm.

In another embodiment of this invention, where a resonant system for the activation is used, the ratio of the wavelength of the media which resonates vs. the dimension of the activation zone should be at least 1 to the value of the mean free path of the fluid components [atoms/molecules/composites]. In this case local energy fluctuations are overcome by the component movements and a uniform exposure to the activation energy is guarantied. An example for this embodiment would be an atmospheric pressure gas system activated by a 1064 nm YAG Laser in a reactor dimension of 10 cm, where the gas atoms/molecules have a mean free path of about 1µm at room temperature.

Preferably, the type of the activation energy is selected from the group of RF plasma, MW plasma, IR plasma, thermal plasma, heat, photo absorption or activation, or plasma by electric discharge, radioactive radiation or sonar energy or combinations thereof.

In one embodiment of the present invention, the flow of the precursor through the activation zone is constant, thus, the retention time of the precursors in the activation zone is constant.

In another embodiment of the present invention the method is characterized in that the unit for providing the activation energy is relatively movable to the area/volume where the nanoparticles are generated. In particular, the unit for providing the activation energy is moved with a constant velocity and constant width through the stagnant layer of precursors.

The present invention may be applied to fluids, containing the precursors. That is, in the method according to the present invention, the precursors may be present in a gas phase or may be present in a liquid phase. Alternatively, the precursors might be present in solids, e.g. micrporous material, like zeolite, polysilicon etc. Thus, solids like catalysts may be prepared containing nanoparticles.

In a preferred embodiment for generating coated nanoparticles, the method comprises to expose the nanoparticles obtained after the first activation zone to a second activation zone to apply a coating to the nanoparticles.

For example, the precursor(s) for coating the nanoparticles may be supplied to the nanoparticles obtained after the first activation zone through a supply arranged downstream from the first activation zone and upstream of the second activation zone. In another embodiment the precursors for the coating are already present from the start but activated with different activation energy in a 2nd zone downstream from the particle nucleation and generation zone.

In some embodiments, the activation energy is pulsed for a predetermined time or a predetermined sequence and with a predetermined energy in the activation zone.

Nanoparticles produced by the methods according to the present invention are characterized in that the particle size of said nanoparticles exhibits deviations of less than 10% from the mean size (RMS), like less than 5% deviation in size, for at least 95% of the produced nanoparticles.

The device according to the present invention allows the production of nanoparticles according to the method of the present invention.

### Brief description of the drawings

- Figure 1:: Figure 1 shows the particle size distribution of two different types of nanoparticles obtained with the microwave plasma system as described by Vollath et al, e. g. in DE 196 38 601 and DE 102 03 907 As can be seen from figure 1, nanoparticles having a broad particle size distribution have been obtained.
- Figure 2:: Figure 2 is a flow chart showing a first embodiment of the present invention.
- Figure 3:: Figure 3 shows a flow chart for a liquid based carrier system.
- Figure 4:: Figure 4 is a flow chart showing another embodiment of the present invention. In particular, figure 4 provides a flow chart showing an embodiment wherein the unit for providing the activation energy is movable over a stagnant or moving precursor.
- Figure 5:: Figure 5 provides a flow chart of another embodiment of the present invention showing a method for providing coated nanoparticles. Figure 5 shows an embodiment having two activation zones where in the first activation zone nanoparticles are generated while in the second generation zone said nanoparticles are coated with precursor molecules introduced to the generated nanoparticles.
- Figure 6:: Figure 6 is a flow chart showing the embodiment for a method using a pulsed system.
- Figure 7:: Figure 7 shows a device for the production of nanoparticles according to the present invention.

### Detailed description

The following description of particular embodiments is offered by way of illustration and not by way of limitation. Unless contraindicated or noted otherwise herein, the terms "a" and "an" mean one or more, the term "and/or" herein includes the meaning of "and", "or" and "all or any other combination of the elements connected by said term".

The following definitions are set forth to illustrate and define the meaning and scope of the various terms used to describe the invention herein.

"Activation zone" refers to the area where the precursors are activated by applying activation energy, e.g. in form of electromagnetic waves to said precursors. Typically, but not necessarily, the activation zone is present in a reactor or device. The activation zone can be the zone, where the nanoparticles. nucleate, grow or/and are coated.

"Electromagnetic wave" refers to the full electromagnetic spectrum with wavelength of several hundred meters to several nanometers. Further, the use of electromagnetic waves may be accompanied by additional heat to promote diffusion of the precursors to the growing nanoparticles. Heat may also serve to elevate the energy to a level, where the additional activation energy from e.g. electromagnetic waves suffices to accomplish the chemical reaction for the nucleation and growth of the nanoparticles.

"Substantially uniform" or "substantially homogenous" as used herein refers to a state where the referenced parameter is identical or deviates barely detectable. In other words, the precursors, nanoparticles and/or coatings receive the same amount of activation energy during the transition through the activation zone. There should be no substantial nonuniformities as we experience them for example in the microwave plasma resonator generation system of DE 196 38 601. That is, the total energy density the particles experience on their way through the activation zone is uniform.

The present invention relates to methods for the production of nanoparticles. In this connection, nanoparticle is a nanoscopic/small particle whose size is measured in nanometers (nm). It is defined as a particle with at least one dimension <100nm, usually of the order of 1 to several 10 nm.

In particular, the present invention overcomes the problems known in the art for providing nanoparticles having a narrow size distribution without applying a further cost-intensive and laborious size dependent separation process.

According to the present invention, nanoparticles may be produced using a method comprising the step of forming nanoparticles in a reactor from precursors by applying activation energy thereto. Said precursors being activated in an activation zone of said reactor for a predetermined time at a predetermined concentration of the precursors characterized in that the amount of activation energy over the time when passing the activation zone is substantially the same for the precursors. That is, the present inventor recognized that it is essential to subject all precursors to substantially the same activation energy when passing the activation zone in order to obtain nanoparticles having a narrow particle distribution. For example, the energy density may be substantially identical in the whole activation zone. However, it is also possible that the energy density or the activation energy decreases from the portion where the electromagnetic waves for providing the activation energy are impinged in the activation zone to the area where the electromagnetic waves leaves the activation zone. Both systems are possible according to the present invention as long as the amount of activation energy supplied to all precursors is substantially the same.

The present inventor found that a drawback of the systems known in the art for producing nanoparticles lies in the inhomogeneity of the activation energy in the activation zone. For example, in the system as described by Vollath et al, e.g. in DE 196 38 601, the energy is provided substantially non-uniform since said is based on a resonating microwave system. This is especially true, when the system has the same dimensions as the reactor, which is the case in the above mentioned patent document. This negatively influence the particle size distribution of the obtained nanoparticles since the particles would not experience an uniform activation energy exposure over a predetermined time, namely the time in the activation zone.

Using a resonator results in the generation of standing waves in the system, as described e.g. in DE 196 38 601. This is done by Vollath in the above mentioned system since the activation zone has dimensions similar to the wave length of microwave system. Standing waves are not excluded in the present invention, however, it is important that for uniformity reasons, standing waves should be either much larger or much smaller than the activation zone, to avoid no uniformity of the activation zone. (at least a factor of >5 or <1/5 would be sufficient for the ratio wavelength/ reactor dimension). This is of particular importance for resonant based systems.

Further, according to the present invention it is possible to use travelling waves (non resonating waves) which is especially preferred in the case of the Laser or other light sources, which can generate uniform activation zones in gases, liquids and solids alike.

For example, the wavelength of an industrial rf plasma is approximately 22 m for the typically frequency of f = 13.56 MHz. This length is relatively large with respect to a reaction chamber normally used for the preparation of nanoparticles, which has typical sizes of up to several 10 cm. Therefore the uniformity of the plasma over the defining length d in said reactor is independent of the wavelength. The uniformity is only influenced by minor peripheral nonuniformities due to reactor and electrode- or coil configuration, that is, the plasma is substantially uniform. This plasma uniformity is decisive for the particle size and its coating thickness.

In contrast, microwave frequencies for commercial permissible plasmas of 0.915 GHz or 2.45 GHz have wavelength of about 32 cm and 12 cm, which results in variations of the plasma intensity and power over the defining reactor dimensions and activation zone having typical sizes of up to several 10 cm. Together with the edge effects of the plasma, these plasma intensity fluctuations along the activation zone significantly influence the uniformity of nanoparticles and/or their coatings.

The activation energy contributed by Lasers or light can be applied by photon absorption or activation and does not necessarily require a plasma. In this case not only the intensity, which is controlled optically but also the wavelength itself contribute the activation energy and influence the chemical reaction. With the present invention the reaction can take place in gases, fluids and solids and the uniformity of the light beam only depends on the optics and the absorption. ("Light" is not restricted to the visible wavelengths but extends beyond the infrared and the ultraviolet regime.) The absorption of the light beam can be controlled by optical means, by applications of the beam from both/all sides or by keeping the activation zone narrow in relation to the absorption length of the light. The beam may also be introduced along the flow of the precursors. If there is absorption along the way, it effects all precursors the same. The activation may also depend on the wavelength of the light which is determined by the (Photon)Light/Laser source chosen.

In case a resonant Laser beam is used to generate plasma, the energy density would only fluctuate for standing waves with half the wavelength and in the order of say 50 nm to several 100 nm. The length of the mean free path of a gas/ion molecule for standard (1 bar, 273.15K) conditions is of the same magnitude or larger. Therefore local non-uniformities are immediately compensated by the atomic/molecular/ionic movements. Again the nanoparticle size and coating thickness are determined by the exact lengths over which the laser/light beam is applied to generate the plasma and to contribute the activation energy. The average plasma density can be made very uniform by optical means.

For dc- plasma the plasma uniformity is not influenced by a wavelength. In this case the reactor and electrode configuration and of course the chemistry and the partial pressures determine the plasma uniformity along the activation zone, which determine the size of the nanoparticles and their coatings.

According to a preferred embodiment of the present invention, the unit for providing the activation energy could be a RF source, a microwave source, a light source such as an excimer-pumped dye laser (for example an XeCl excimer laser operating at 308 nm), a tuneable Nd:YAG laser, an UV or IR source, an X-ray source, a sonar source or a heater.

In particular, when using a laser system for providing the activation energy in the activation zone it is possible that the precursors are present in fluids, like gases and liquids as well as in other systems like sol/gel systems and in solids. For example, the carrier for the precursor molecule may be a gas or a liquid. Alternatively, the precursors may be present in a solid and may be subjected to the activation energy to produce nanoparticles. E.g. in case of catalysts, the precursors of the nanoparticles may be present in the carrier of the catalytic system, the catalyst itself or on the surface of the catalyst and the active ingredients in the form of nanoparticles may be produced in the carrier system by applying activation energy to the system.

In a solid, the precursor may be desolved in the solid or part of the solid may be the precursor. E.g. the activation energy in combination with heat allows the precursor to defuse and migrate and react to nanoparticles. The diffusion may be bulk diffusion or grain boundary diffusion in a polycrystalline solid such as polysilicon.

Gases useful as a gaseous carrier system are e.g. an inert gas, like argon, neon, krypton and xenon. If a carrier gas is needed, it should be neutral to the reaction or facilitate the reaction but not disturb it. Hydrogen for example is a gas, which is involved in Si particle generation from e.g. Dichlorosilane (SiH₂Cl₂),

SiH₂Cl₂ + H₂ ←> Si + H₂ + 2HCL

where H₂ helps the Si-generation and can be used as a dilutand or carrier gas.

Depending on the chemistry, a liquid carrier system useful according to the present invention may be water, alcohols, solvents, acids, bases, oils, metals, polyimids, etc or mixtures thereof.

As precursors, all kinds of precursors may be used. Precursors in a gaseous system can be solids, liquids and gases. A solid precursor like TaCl₅ needs to be sublimated and transported either by its sublimation pressure or by a carrier gas neutral or helpful to the reaction. A liquid precursor like TEOS may be vaporized and transported by its vapour pressure or by a carrier gas, which bubbles through it and is carried into the reactor. Obviously a gas precursor can be added through a conventional gas panel.

In a liquid system also gaseous, liquid and solid precursors can be used. A gas can simply be dissolved in a neutral or helping liquid, such as Ozone in water which generates H₂O₂, a strongly oxidizing agent. Equally N₂, CO₂, O₂ etc easily are dissolved in water. A liquid can simply be added to the liquid flow. A mixing procedure may be required. A solid must be dissolved in a neutral or helping carrier liquid, which is often done by adding a salt to a liquid. This solution can be added to the precursor flow. The production and the supply of the precursors to the activation zone may be effected by measures and means known in the art.

The nanoparticles obtained according to the present invention may be deposited directly without additional classification of the nanoparticles on a variety of substrates including both organic and inorganic substrates. The deposition may be effected by passing the stream of nanoparticles over the substrate and allowing the nanoparticles to become affixed to the substrate by, e.g. electrostatic attraction or condensation. The substrate may be relatively movable to the stream, thus, building a thin layer, which may be a single layer, on the substrate.

With the method according to the present invention, it is possible to make the process of classifying the resulting nanoparticles to obtain nanoparticles of a defined and narrow size distribution redundant, thus, saving time and money.

In this connection it is noted that the methods as described herein may require total and partial pressures other than atmospheric pressure. The nanoparticles produced according to the present invention may be collected and/or generated on surfaces, substrates, collectors, cold traps, in liquids, in suspension, in solids and so forth.

The activation energy may be supplied by any one of the sources described above, or a combination thereof.

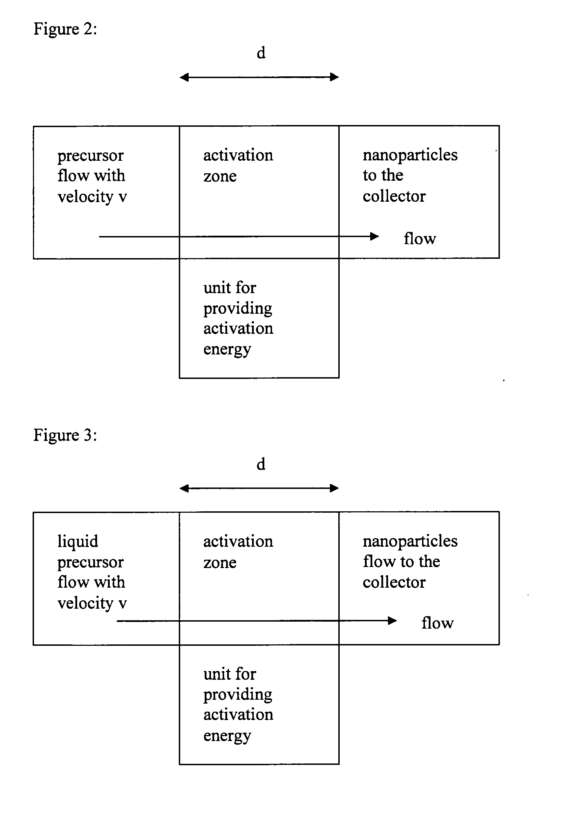

In the following, the present invention will be described further making reference to the flow charts shown in figures 2 to 7.

Firstly, a system comprising a chemical vapour synthesis (CVS) of nanoparticles with a narrow size distribution is described.

Nanoparticles can be generated from the gas phase by providing one or more precursors in the gas phase with the necessary activation energy, thus, a chemical reaction is induced resulting in the nucleation and growth of the desired nanoparticles.

According to the method of the present invention, the size of the particles is limited by determining the time during which the precursors are exposed to the activation energy for the nucleation and growth of the nanoparticles. In particular, in the CVS system the precursor gas mixture flows with a predetermined velocity through a reaction chamber comprising the activation zone, where the activation energy is provided. The activation energy is only provided during the predetermined time when the precursors flow through the activation zone, thus, the limited time as well as the strength of the activation energy, the kind of activation energy (for example the photon energy determined by the wavelength), the field strength of the electromagnetic waves, determine the size of the nanoparticles. It is clear that also other parameters, like concentration of the particles, reactor shape, type of flow, total pressure etc must be kept constant. Figure 2 shows a flow chart for a method according to the present invention. In particular, figure 2 shows a system containing one activation zone and having a precursor flow with a constant velocity and constant concentration of the precursor using a fluidic carrier system. The activation energy is supplied to the precursor in the activation zone having a constant length d. In figure 2, the unit of providing the activation energy is a laser system. Of course any other system as described herein is possible.

Another embodiment for the so called method of the chemical liquid synthesis (CLS) of nanoparticles with a narrow size distribution which is very similar to the CVS method described above is shown in figure 3. According to the CLS method, the precursor is present in a liquid carrier system. Appropriate liquid carrier systems are described above. The liquids containing the precursors flow with a predetermined velocity through the reaction chamber containing the activation zone where the activation energy is provided to the system. Thus, the activation energy for the nucleation and growth is only provided during the time t when the precursors pass the activation zone. Hence, the limited time in combination with the substantially uniform strength of the activation energy determine the size of the nanoparticles. Of course other parameters as listed above have to be kept constant.

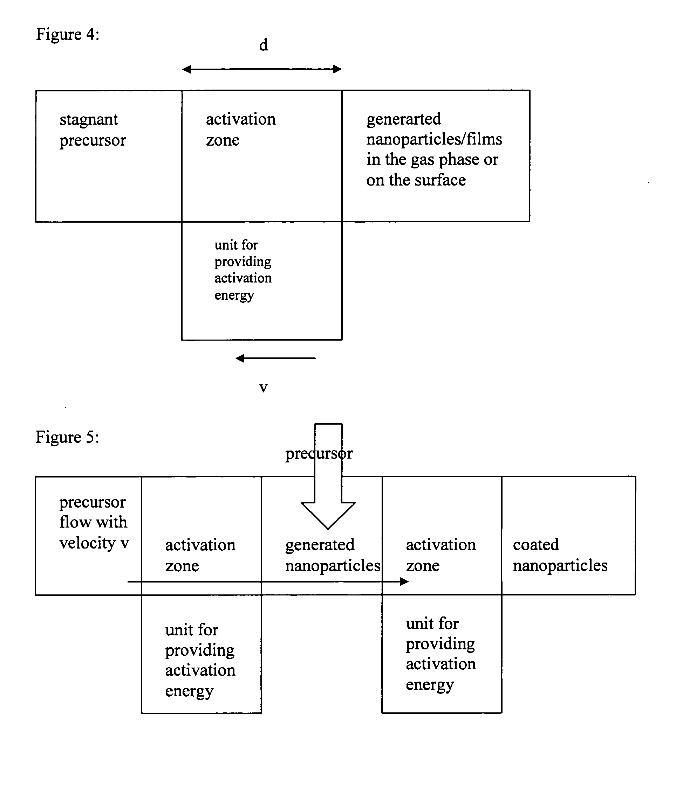

A further embodiment of the CVS and the CLS system is shown in figure 4.

Here, the carrier system containing the precursors is stagnant while the unit for providing the activation energy, for example, a laser sweeps with velocity v through the gas or liquid or solid carrier system, respectively. The reaction time t of the precursor is limited to a predetermined zone where the activation energy is provided. Again, the limited time and the strength and time of the activation energy determine the size and type of the nanoparticles. Additional heat may be required to mobilize the precursors, e.g. by diffusion. The same is true for the CLS system as shown in figure 4. Again the unit for providing the activation energy, for example a laser, sweeps over the liquid carrier system, the sol/gel system or the solid carrier system which is stagnant or which flow with a much lower velocity than the sweep velocity. As described above, the reaction time is limited to the activation zone and thus, a predetermined amount of activation energy can be applied for a predetermined time, thus, resulting in nanoparticles having a narrow particle size distribution.

Another embodiment of the invention is outlined in the following to allow two or more different reactions of the nanoparticles. Typically, in the first reaction the nucleation and growth takes places while in the second reaction a coating to the particles is applied. In further reaction step(s), coating of a different compound may be affected. These two or more different reactions can follow one another with two or more different and distinct activation energies applied subsequent in time to the initial nucleation and growth sweep/zone of the nanoparticle. In particular, as shown in figure 5, in the first activation zone nanoparticles are formed from the precursors. Said nanoparticles being supplied with additional precursors which may be identical or different to the precursors of step/reaction 1. Subsequently the mixture passes the second activation zone to coat the nanoparticles of step 1 with the precursors. The electromagnetic wave providing the activation energy for the second activation zone may have the same activation energy or may have a different and distinct activation energy which causes a different reaction. Thus, a nucleation in the first step and a coating in the second step can be achieved.

The precursors for coating may be present in the initial system entering the first activation zone or may be supplied to the nanoparticles recovered after the first activation zone not containing the initial precursors. Of course it is possible to combine two or more activation zones.

In case of precursors or nanoparticles fixed in or on a layer or in or on a solid (chemical solid synthesis CSS) it is possible to perform pattern writing and the like.

With the methods described above, it is also possible to deposit nanoparticles on a surface or in a solid or microporous material like carrier systems for catalysts.

In case of using a system where the unit for providing the activation energy sweeps over the precursor containing system which may be a fluid or a solid system, the sweep velocity and the dimension of the activation zone as well as the kind of activation energy will determine the size and/or thickness of the nanoparticles and the coating thereof.

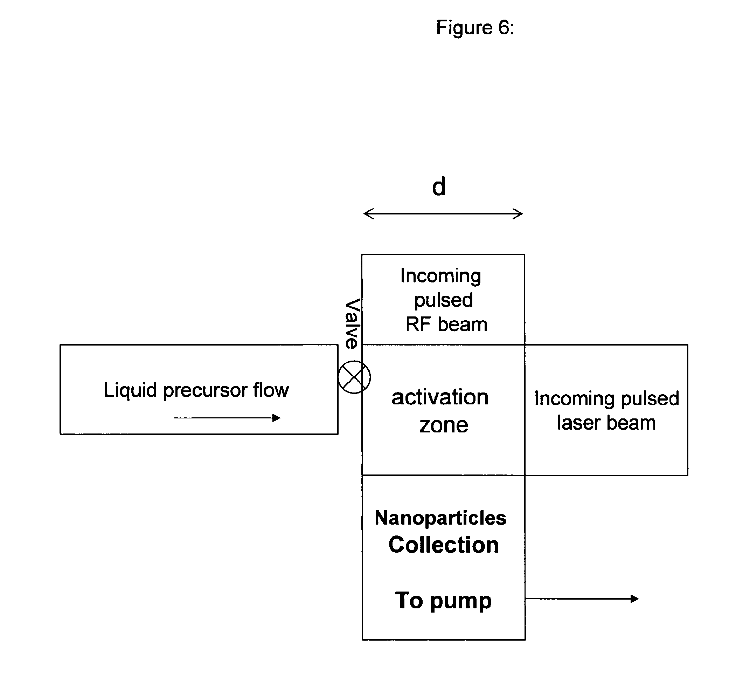

A further embodiment of the present invention is shown in figure 6. Figure 6 is a flow chart showing a system for a pulsed nanoparticle synthesis. Various methods lend themselves to pulse the activation energy for a predetermined time and with a predetermined energy in gas, liquid, gel/sol system, solid or on the surface. The time and amount of activation energy which is controlled by the number and period of pulses determine the nucleation and growth and, thus, the size of the nanoparticles. Further, as shown in figure 6, it is possible to use two different systems to pulse the activation energy. In figure 6 a RF beam is provided and, additionally, a pulsed laser beam. The pulses may be applied at the same time or may be applied sequentially. If required, additional heat may be applied to promote diffusion.

Generally, in gas systems, the chemical composition and the partial pressure of the precursors in the gas determine the chemistry and size of the nanoparticles and their coatings. In liquids, the chemical composition and the concentration of the precursor in the liquid determine the chemistry and the size of the nanoparticles and their coatings. In solids or in sol/gel systems the chemical composition, doping of the precursors and diffusivity in the solid or the sol/gel determine the chemistry and the size of the nanoparticles and their coatings.

As indicated before, the method according to the present invention allows the production of nanoparticles in liquid, sol/gel and solid systems. This is particularly true when using a laser or other type of photon activation.

When using a laser system to provide the activation energy, it may be preferable that the electromagnetic waves are in the direction of the flow of the precursors. Of course it is possible that the angle of incidence is vertical to the direction of flow or when sweeping the unit for providing the action energy, is vertical to the layer. Other angles are also possible as long as the amount of activation energy over the time when passing the activation zone is substantially the same for the precursors.

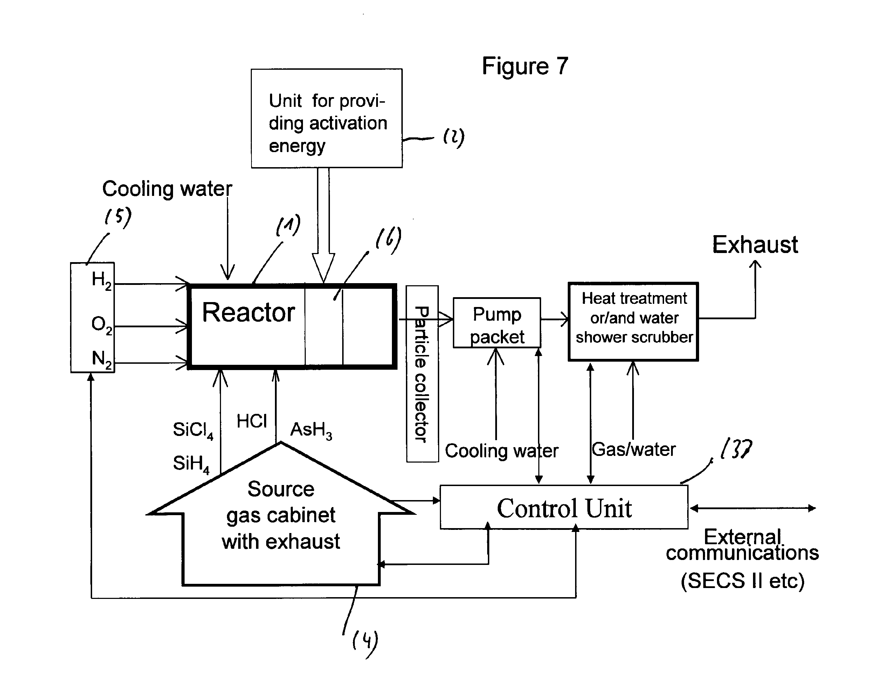

Figure 7 shows a device according to the present invention. The device comprises the reactor (1) containing the activation zone (6), the activation unit for providing the activation energy (2) and the control unit (3). The control unit (3) controls the supply of the precursor material, e.g. the concentration of the precursor in the system and the velocity of the flow through the activation zone of the reactor (1). In addition, the control unit (3) regulates the amount and the type of activation energy introduced into the activation zone (6). Further, the control unit (3) may regulate the amount of fluid provided as the carrier system. Optionally, the control unit (3) determines the particle size of the generated nanoparticles and controls the particle size distribution and the particle size itself. As shown in figure 7, the precursors might be provided from a source gas cabinet (4). Further, the device according to the present invention may comprise a unit to provide carrier fluid, like carrier gas (5).

In some instances, the nanoparticles produced in accordance with the method provided herein may have an average diameter of no more than about 50 nm. This includes nanoparticles having an average diameter of no more than about 30 nm, further includes nanoparticles having an average diameter of no more than about 10 nm, still further includes nanoparticles having an average diameter of no more than about 5 nm and even further includes nanoparticles having an average diameter of no more than about 2 nm.

The type of nanoparticles which may be produced with the method according to the present invention encompasses metal nanoparticles, metal alloy nanoparticles, metal oxide nanoparticles, metal nitride nanoparticles, semiconductor nanoparticles, ceramic nanoparticles, nanodots, dielectricnanoparticles, superconducting nanoparticles etc and all types of coated nanoparticles.

As described above, the size of the nanoparticles produced in accordance with the method according to the present invention will depend on, at least, the residence time of the particles in the activation zone, which in turn depends on the flow rate of the precursor.

## Claims

1. A method for preparing nanoparticles having a narrow size distribution comprising the step of forming nanoparticles in a reactor from precursors by applying activation energy thereto said precursors being activated in an activation zone of said reactor for a predetermined time at a predetermined concentration of the precursors **characterized in that** the amount of activation energy over the time when passing the activation zone is substantially the same for the precursors.

2. The method according to claim 1, wherein the activation energy is introduced into the activation zone with electromagnetic waves.

3. The method according to claim 1 or 2, wherein the energy density vertical to the introduced electromagnetic waves is substantially uniform.

4. The method according to any one of claims 1 to 3, wherein the ratio of the wave length of the electromagnetic waves to the dimension/width of the activation zone is at least 5:1 or higher or, alternatively, 0,2:1 or lower.

5. The method according to any one of claims 1 to 3, wherein the ratio of the wave length of the activation energy to the dimension/width of the activation zone is at least of the order of the mean free path of the atom/molecule/composite of the fluid in which the precursors are supplied.

6. The method according to claim 1, wherein the type of the electromagnetic waves for providing the activation energy is selected from the group of RF, MW, IR, UV laser or other light sources, or obtained by electric discharge, radioactive radiation, heat or sonar energy or a combination of at least two of said types of electromagnetic waves.

7. The method according to any one of claims 1 to 5, wherein the type of activation energy in the activation zone is selected from the group of RF plasma, MW plasma, IR plasma, thermal plasma, heat, photon absorption, plasma by electronic discharge or radioactive radiation or sonar energy or a combination thereof.

8. The method according to any one of claims 1 to 5 and 7, wherein the type of activation energy is photon absorption through light and said light is applied from one or more sides to the activation zone.

9. A method according to any one of claims 1 to 8, **characterized in that** the activation energy is pulsed for a predetermined time and a predetermined energy in the activation zone.

10. The method according to any one of claims 1 to 9, wherein the unit for providing the activation energy is relatively movable to an area/volume which contains the precursors.

11. The method according to any one of claims 1 to 10, wherein the precursors are stagnant in the reactor and the unit for providing the activation energy is moved with a constant velocity and constant width through the stagnant layer of precursors.

12. The method according to any one of the preceding claims wherein the precursor are present in a gas phase.

13. The method according to any one of claims 1 to 11, wherein the precursors are present in a liquid phase.

14. The method according to any one of claims 1 to 11, wherein the precursors are present in a solid phase.

15. A method according to any one of the preceding claims, wherein after the activation zone generating first nanoparticles said first nanoparticles are subjected to a second activation zone for applying coatings to the nanoparticles.

16. A method according to claim 15 further comprising the step of supplying additional, optionally different precursors downstream from the first activation zone and upstream of the second zone to the nanoparticles generated in the first activation zone.

17. Device for producing nanoparticles according to a method of any one of claims 1 to 16 comprising an activation unit for providing the activation energy, at least one reactor having at least one activation zone and a control unit **characterized in that** the control unit is provided for controlling one or more of the group of the activation energy, the pressure in the reactor, the temperature, the flow of the precursors, the concentration of the precursors and/or the reaction time for controlling the provision of the amount of activation energy over the time when the precursor pass the activation zone being substantially the same.

18. Device according to claim 17, **characterized in that** said device comprises at least two activation zones for allowing to produce coated nanoparticles.

19. Device according to claim 18 further comprising a supply arranged downstream of the first activation zone and upstream of the second activation zone for supplying precursor for coating nanoparticles.
